Europäisches Patentamt

European Patent Office

Office européen des brevets

(11) Veröffentlichungsnummer: **0 222 179**
**B1**

(12) **EUROPÄISCHE PATENTSCHRIFT**

(45) Veröffentlichungstag der Patentschrift: **11.04.90**

(51) Int. Cl.⁵: **B 62 M 23/02**

(21) Anmeldenummer: **86114102.6**

(22) Anmeldetag: **11.10.86**

(54) Fahrrad mit zuschaltbarem Motorantrieb.

(30) Priorität: **24.10.85 DE 3537864**

(43) Veröffentlichungstag der Anmeldung:
**20.05.87 Patentblatt 87/21**

(45) Bekanntmachung des Hinweises auf die
Patenterteilung:
**11.04.90 Patentblatt 90/15**

(84) Benannte Vertragsstaaten:
**AT BE CH DE ES FR GB GR IT LI LU NL SE**

(56) Entgegenhaltungen:
DE-A-2 124 274
DE-A-2 245 767
FR-A- 870 657
GB-A-2 083 423
US-A-3 827 519
US-A-3 921 745
US-A-4 111 274
US-A-4 280 581

(73) Patentinhaber: **Binder, Wilhelm, Dr. Dipl.-Ing.**
**Germanstrasse 24**
**D-7730 Villingen-Schwenningen (DE)**

(72) Erfinder: **Binder, Wilhelm, Dr. Dipl.-Ing.**
**Germanstrasse 24**
**D-7730 Villingen-Schwenningen (DE)**

(74) Vertreter: **Westphal, Klaus et al**
**Patentanwälte Dipl.-Ing. Klaus Westphal**
**Dr.rer.nat. Bernd Mussgnug Dr.rer.nat. Otto**
**Buchner Waldstrasse 33**
**D-7730 VS-Villingen (DE)**

## Beschreibung

Die Erfindung betriff ein Fahrrad nach dem Oberbegriff des Anspruchs 1.

Obwohl zahlreiche Fahrräder dieser Art in der Literatur beschrieben sind, hat sich bis heute keines am Markt durchsetzen können, obwohl offensichtlich z.B. aus Gründen des Umweltschutzes und zur Hilfe für Gehbehinderte bzw. ältere Menschen ein Bedarf an einer elektromotorischen Trethilfe für ein Fahrrad besteht. Auch für das Kleintransportwesen, z.B. für die Hausfrau zum Einkauf oder für den Weg zur Arbeit über verhältnismäßig kurze Strecken im Stadtverkehr (z.B. durch die Fußgängerzone), wäre ein solches Fahrzeug nützlich, das darüber hinaus unproblematisch zu parken ist.

Aus der US-A-4 111 274 ist ein dreirädiges Fahrrad bekannt, bei welchem zum Pedalantrieb ein Elektromotor in zwei Stufen zugeschaltet werden kann. Der Pedalantrieb wird hierbei auf eines der beiden Hinterräder und der Motorantrieb auf das andere Hinterrad übertragen, wobei die hintere Achse zweigeteilt ist. Dieser elektromotorische Antrieb macht ein Spezialfahrrad erforderlich, das im übrigen andere Fahreigenschaften als ein normales zweirädriges Fahrrad hat.

Auch aus der US-A-4 280·581 ist ein Fahrrad mit elektromotorischem Hilfsantrieb bekannt, das einen Spezialrahmen erfordert und dessen elektromotorischer Antrieb nicht stufenlos zuschaltbar ist.

Für ein Fahrrad mit elektromotorischem Hilfsantrieb, bei dem alternativ noch reiner Pedalbetrieb möglich sein soll, kommt es entscheidend auf die Verwendung weniger leichter Batterien an, deren Kapazität folglich vergleichsweise gering ist. Um bei elektromotorischem Antrieb eine genügende Reichweite zu ermöglichen, muß folglich die zur Verfügung stehende Batterieleistung auch bei zusätzlichem oder ausschließlichem Pedalantrieb in dem in Betracht kommenden Geschwindigkeitsbereich optimal ausgenutzt werden.

Dies ist bei der bekannten Lösung noch nicht gewährleistet.

Der US-A-3 921 745 ist ein normales zweirädriges Tourenfahrrad zu entnehmen, bei welchem alternativ das Hinter- oder Vorderrad von einem Elektromotor angetrieben werden kann. Diese Druckschrift gibt jedoch keine Anregungen für eine Optimierung des elektromotorischen Antriebs bei Berücksichtigung zusätzlichen oder reinen Pedalantriebes.

Die FR-A-870 657 zeigt gleichfalls ein normales zweirädriges Fahrrad, das nachträglich mit einem elektromotorischen Antrieb ausgerüstet ist. Von diesem Fahrrad, dessen Merkmale im Oberbegriff des Hauptanspruchs angegeben sind, geht die vorliegende Erfindung aus. Nachteilig bei diesem bekannten Fahrrad ist der zweistufige elektromotorische Antrieb. Außerdem ist die Anordnung des auf dem Gepäckträger montierten Elektromotors unpraktisch und wegen der Schwerpunktsverlagerung sowie erschwerter Demontierbarkeit bei einem Radwechsel ungünstig.

Mit der vorliegenden Erfindung soll ein Fahrrad dieser Art mit seiner bisherigen Pedalantriebseinrichtung so verbessert werden, daß sowohl die Herstellung als auch der Einbau einer Zusatzantriebs-Einrichtung den Gesamtpreis des Fahrrades nicht wesentlich verteuert. Es soll nur durch Einbau einer Elektro-Zusatzausrüstung bei einem üblichen Fahrrad die Transportleistung erhöht werden, wobei zugleich die Umweltfreundlichkeit erhalten bleibt und die Nutzung des Fahrrads auch in bisheriger sportlicher Hinsicht keineswegs beeinträchtigt wird.

Diese Aufgabe wir bei einem Fahrrad nach dem Oberbegriff des Anspruchs 1 erfindungsgemäß durch die kennzeichnenden Merkmale des Anspruchs 1 gelöst.

Nach dem erfindungsgemäßen Vorschlag wird davon ausgegangen, daß mit dem Fahrrad grundsätzlich keine höheren Geschwindigkeiten erreicht werden sollen, als sie auch mit dem normalen Pedalantrieb üblicherweise zu erreichen sind. Dies entspricht bei einem nicht trainierten, gesunden Radfahrer einer Fahrgeschwindigkeit von etwa 20 bis 25 km/h auf ebener glatter Fahrbahn. Nach einem erfindungsgemäßen Merkmal wird der Maximalwert der stufenlos regulierbaren Antriebsleistung des zuschaltbaren Motorantriebs so ausgelegt, daß bei ausschließlichem Motorantrieb ohne zusätzlichen Pedalantrieb unter den angegebenen Bedingungen bei einem mittleren Fahrrad- und Fahrergewicht eine Fahrgeschwindigkeit von 20 km/h erreicht wird. Durch diese Beschränkung ist nicht nur ein minimales Gewicht der für den Motorantrieb zusätzlich erforderlichen Teile erreicht, sondern auch eine gezielte Gewichtseinsparung für die Batterien als Energiespeicher gewährleistet und ausgezeichnete Umweltfreundlichkeit und gleichzeitige Bequemlichkeit für den Fahrer erreicht. Fahrzeuge dieser Art dürfen ohne Schutzhelm und ohne zusätzliche verkehrstechnische Fahrprüfungen benutzt werden.

Die Antriebsleistungen sind in ihrer Bilanz für den Fahrbetrieb derart aufeinander abgestimmt, daß unter Wahrung der Verkehrssicherheit des üblichen Fahrradbetriebes im Geschwindigkeitsbereich 0 bis 20 km/h auf ebener Fahrbahn die Elektro-Antriebsleistung der üblichen Pedalleistung entspricht. Bei höheren Geschwindigkeiten (entweder Bergabwärtsfahrt oder zusätzlichem Pedalantrieb vom Fahrer zum Elektroantrieb) arbeitet der Elektromotor auf abfallender Leistungskennlinie, so daß der Beitrag des elektromotorischen Antriebes im höheren Geschwindigkeitsbereich abnimmt, was die Verkehrssicherheit beträchtlich verbessert.

Bei einem erfindungsgemäßen Fahrrad kann also der Motorantrieb im Bereich von 0 bis 20 km/h den Fahrer praktisch von der Pedalantriebsleistung befreien. Zur stufenlosen Regulierung der Antriebsleistung, die auch aus Verkehrssicherheitsgründen notwendig ist, ist nach einem weiteren Merkmal der Erfindung am Lenker des Fahrrads ein Leistungsregler vorzugsweise als Drehgriff angebracht, der über Fernwirkeinrichtungen mit dem Batteriespeicher verbunden ist. Hierbei ist ein einfacher Regelvorgang ausführbar. Um sicherzustellen, daß das erfindungsgemäße Fahrrad bei Schäden am Hinterrad genauso einfach wie ein Standardfahrrad zu reparieren ist, ist nach einem weiteren wichtigen Merkmal der Erfindung der gesamte Motorantrieb zu einer Baueinheit in einem Motorkasten zusammengefaßt, der einerseits auf der Achse des Hinterrades und andererseits an einer Rahmenstrebe mit einem Bügel auf der der Kettenpedalantriebseinrichtung gegenüberliegenden Seite befestigt ist.

Weitere den Gegenstand der Erfindung verbessernde bzw. weiterbildende Merkmale und Maßnahmen, wie sie z.T. bei dem zeichnerisch dargestellten Ausführungsbeispiel veranschaulicht sind, sind mit den Unteransprüchen 2 bis 16 gekennzeichnet.

Mit Anspruch 3 ist eine einfache und weitgehend verlustfreie Umschaltung der Motorbetriebsspannung angegeben. Hiernach können die einzelnen Batterien des Batteriespeichers wahlweise in Reihe, in Gruppen oder parallel geschaltet werden, wobei mittels einer gesonderten Leistungsregelung die Zwischenstufen dieser Schaltgruppen überbrückt werden können.

Ein besonderer Vorteil der Erfindung ist darin zu sehen, daß die für den zusätzlichen Motorantrieb erforderlichen Teile verhältnismäßig einfach am normalen Fahrrad angebracht werden können. Nach der bevorzugten Ausführungsform gemäß Anspruch 7 besteht der gesamte Motorantrieb aus drei Baueinheiten, die bei geringstem Montageaufwand am Lenker bzw. am Rahmen des Fahrrades ohne Zuhilfenahme von Spezialwerkzeugen praktisch bei allen gängigen Fahrradtypen angebracht werden können.

Damit die bei Bergabfahrten freiwerdende Energie nicht verlorengeht, kann gemäß Anspruch 9 der Freilauf des Motorantriebes gesperrt werden und zur Wiederaufladung der Batterie der Motor als Generator betrieben werden. Voraussetzung für eine einfache Schaltung ist die Verwendung eines permanentmagnet erregten Gleichstrommotors, dessen Kennlinie so ausgelegt ist, daß der Motor bei höherer Geschwindigkeit als etwa 20 km/h zunehmend bremst wenn der Freilauf ausgeschaltet wird. Bei langen Bergabwärtsfahrten führt dies zugleich zu einer erheblichen Schonung der mechanisch arbeitenden Bremsen.

Bei Anwendung der oben erläuterten mit der Erfindung vorgeschlagenen Maßnahmen genügt eine Motorantriebsleistung von etwa 120 Watt. Mit den hierfür erforderlichen Batterien erhöht der erfindungsgemäße Motorantrieb das Gesamtgewicht des Fahrrades um etwa 15%, was bei einem Fahrbetrieb mit bifunktionalem Antrieb, also Pedal- und Motorantrieb, kaum merklich ist. Insbesondere kann das Fahrrad mit dem Motorantrieb ohne größere Schwierigkeiten auch noch über Treppen von Hand transportiert werden.

Durch bewußte Beschränkung des Geschwindigkeitsbereiches auf 0 bis 20 km/h werden durch die Verkehrsordnung vorgegebene erschwerende Auflagen vermieden, so daß gemäß der Erfindung ein herkömmliches Fahrrad mit bekannten und gewohnten Fahreigenschaften ohne wesentliche Gewichtserhöhung durch den elektromotorischen Antrieb verwendet werden kann. Als Energiespeicher eignen sich handelsübliche Bleibatterien mit einer Kapazität von 15 bis 20 Ah bei einer Ausgangsspannung von 24 Volt.

Mit dieser Ausrüstung wird bei normaler Straßenfahrt schon bei reinem Elektromotorbetrieb ein ausreichender Kurzstreckenaktionsradius erreicht. Durch geringfügigen zusätzlichen Pedalantrieb kann auf bequeme Weise die Fahrdistanzstrecke bei einer Batterieladung verdoppelt werden.

Zur Information über Fahrstrecke, Geschwindigkeit und Batterieladezustand sind nach dem Vorschlag gemäß Anspruch 8 am Lenker (im Sichtbereich des Fahrers) Anzeigegeräte angebracht. Damit ist dem Fahrer ermöglicht, eine rationelle Aufteilung der bifunktionalen Antriebsweise durchzuführen, um sein Tagesziel mit geringster eigener Anstrengung zu erreichen.

Durch das Abnehmen des Batteriekastens, was zweckmäßigerweise nach Lösen einer Steckverbindung und Öffnen des Schlosses leicht bewerkstelligt werden kann, läßt sich das Gewicht auf dasjenige eines normalen Fahrrades mit reinem Pedalantrieb reduzieren. Das Fahrrad kann also auch, während die ausgebaute Batterie aufgeladen wird, als normales Fahrrad benutzt werden.

Auch erleichtert die Abnahmemöglichkeit des Batteriekastens das Aufladen der Batterie z.b. mittels eines in der Wohnung befindlichen Ladegerätes. Das Ladegerät kann aber auch, wie mit Anspruch 12 vorgeschlagen ist, am Fahrrad selbst fest angebracht und verdrahtet sein.

Zweckmäßigerweise erzeugt das Ladegerät eine Ladespannung zwischen 12 bis 17 Volt soweit 12-Volt-Batterien verwendet werden. Wegen der möglichen Reihenschaltung der 12-Volt-Batterien kann ein Motor mit einer Betriebsspannung von 24 Volt verwendet werden (vgl. Anspruch 11).

Anhand des in den Figuren gezeigten Ausführungsbeispieles werden weitere vorteilhafte Ausgestaltungen der Erfindung im übrigen näher erläutert. Es zeigt

Fig. 1 eine Seitenansicht des erfindungsgemäßen Fahrrades,

Fig. 2 eine Ansicht von oben auf den Lenker des Fahrrads und

Fig. 3 eine Ansicht des Fahrrads von hinten mit Darstellung des Elektro-Antriebs auf der linken Seite des Hinterrades, wobei erkennbar wird, daß der Kettenpedalantrieb 32 auf der rechten Seite (womöglich mit Mehrgangschaltung) ungestört bleibt.

Am Lenker 10 des Fahrrads ist ein an sich bekannter Drehgriff 12 zur Regelung des Motorantriebs angebracht. Dieser Drehgriff 12 ist über einen Bowdenzug 13 mit den Schaltelementen in einem Relaiskasten 28 verbunden, wobei zweckmäßig durch eine starre Koppelung des Drehgriffs 12 mit den Schaltelementen eine Federrückstellkraft den Elektroantrieb zwangsläufig bei Loslassen des Drehgriffs abschaltet und den Drehgriff 12 in die AUS-Stellung zurückführt. In Ausgangsstellung ist also der Elektroantrieb aus Sicherheitsgründen zwangsläufig abgeschaltet.

Der Relaiskasten 28 ist auf einer Trag-Traverse 29 befestigt, die wiederum am Fahrradrahmen 18 in der Nähe der Tretpedallagerung 22 befestigt ist.

Durch den Drehgriff 12 wird die Leistung des Elektroantriebs gesteuert; dabei ist über dem Drehgriff 12 ein Bremshebel 14 angebracht, wobei in üblicher Weise beim Griff zum Bremshebel der Drehgriff zwangsläufig in die AUS-Stellung springt, also den Elektromotor abschaltet. Es kann also kein Bremsvorgang stattfinden bei gleichzeitigem Elektromotor-Antrieb.

In der Mitte des Lenkers ist ein Kasten mit einem Not-Ausschaltknopf 15 vorgesehen, der in nicht näher gezeigter Weise über ein Steuerkabel ebenfalls die Relaisschaltung in die AUS-Stellung des Elektroantriebs bringt. Dieser Not-Ausschaltknopf 15 kann sowohl in kritischen Verkehrssituationen betätigt werden wie auch beim Abstellen des Rades in der Garage. Zudem ist eine Abschließbarkeit des Not-Ausschaltknopfes vorgesehen, um Diebstahl zu vermeiden. Ferner ist ein Ladezustands-Anzeiger 16 zur Beobachtung des Ladezustandes der im Batteriekasten 24 befindlichen Batterie vorgesehen.

Der Batteriekasten 24 ist abnehmbar an der Trag-Traverse 29 befestigt. Nach Ziehen eines Steckers 20 und Öffnen eines Schlosses 21 kann der Kasten nach unter abgenommen werden.

Der Batteriekasten 24 kann an einem nicht gezeigten Traggriff auf einfache Weise in die Wohnung zum Wiederaufladen mitgenommen werden. Der Batteriekasten schützt außerdem die Batterien gegen· Steinschlag. Im Batteriekasten sind mehrere Standard-Batterien zusammengefaßt untergebracht und in zweckmäßiger Weise miteinander verschaltet (12 bzw. 24 Volt).

Im Kasten mit Not-Ausschaltknopf 15 ist außerdem gut im Blickfeld des Fahrers ein Ladezustands-Anzeiger 16 für die Batterien untergebracht (Zeigergerät oder Leuchtdioden).

Der Motorkasten 30 ist im Bereich der Hinterachse 36 des Fahrrads angebracht und enthält einen Elektromotor 37 sowie ein Reduziergetriebe 38, dessen letztes Zahnrad über eine Kette ein Kettenrad 39 antreibt, das an die Speichen bzw. die Nabe des Hinterrades 40 eingebaut ist. Der Elektromotor 37 ist über ein elektrisches Kabel 34 mit dem Batteriekasten 24 verbunden.

Es ist besonders bemerkenswert, daß der Motorkasten 30 nur an zwei Befestigungsstellen am Fahrradrahmen aufgehängt ist, und zwar in der Achse 36 des Hinterrades 40 und an einer Rahmen-Strebe 41 mit einem einfachen Befestigungsbügel 42. Werden z.B. Befestigungsschrauben gelöst, kann der Motorkaster 30 von diesen beiden Aufhängepunkten als Block abgenommen werden, so daß eine Reifenmontage am Hinterrad 40 des erfindungsgemäßen Fahrzeuges nicht schwieriger als bei einem üblichen Fahrrad ist.

Der Motorblock 30 ist derart tief am Hinterrad angebracht, daß sich für die Anbringung der Gepäckträger 44 und 46 keinerlei Einschränkungen ergeben.

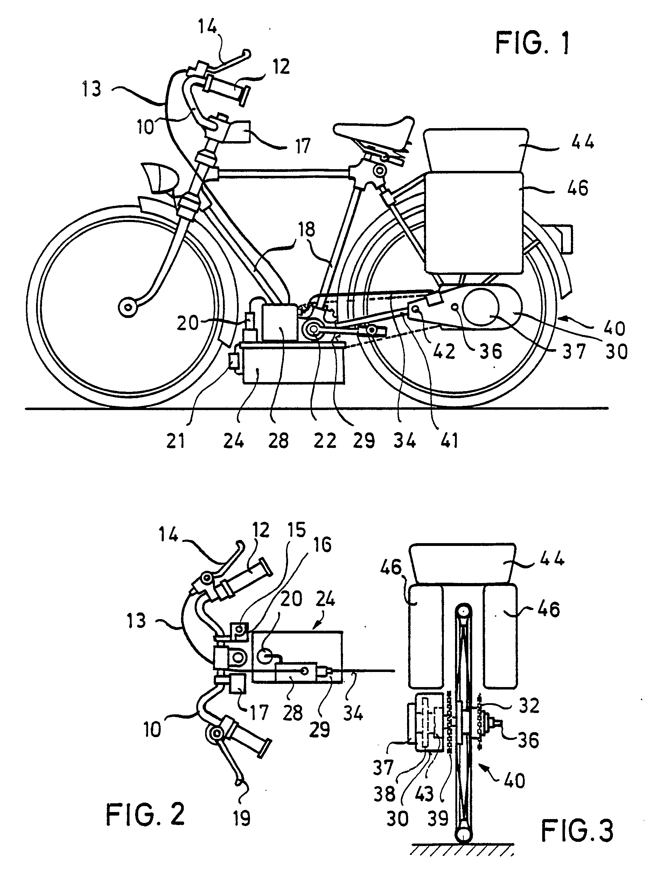

Wie aus Fig. 2 zu ersehen ist, ist links am Lenker 10 ein zusätzlicher Griff 19 angeordnet, der über einen nicht dargestellten Bowdenzug einen im Elektromotorblock eingebauten Freilauf 43 zu sperren vermag. Damit kann vom Fahrer bei Bergabfahrt oder auch an jedem zwangsläufigen Haltevorgang (Ampel) über diesen Hebel eine Bremswirkung unter Energierückgewinnung erzielt werden.

Es ist hier noch zu bemerken, daß der Bremshebel 14 rechts am Lenker 10 beispielsweise ausschließlich zur mechanischen Bremsung, z.B. des Vorderrades dient, wobei über die Pedale das Hinterrad gebremst wird. In Ergänzung zu diesen Bremseinrichtungen wird durch Betätigen des Griffes 19 am linken Teil des Lenkers 10 eine dritte Bremseinrichtung in Gang gesetzt, die zugleich eine Energierückgewinnung bewirkt.

In der Mitte des Lenkers ist zusätzlich noch eine Geschwindigkeits- und Distanz-Anzeige 17 für gefahrene Kilometer angebracht. Damit sind am Lenker in überzeugender Weise alle wichtigen Elemente für den bifunktionalen Fahrbetrieb angebracht. Funktional bleiben beim Fahrbetrieb jeglichen Zustandes beide Hände stets am Lenker, wobei überzeugend einfache Betriebsfunktionen eine hohe Fahrsicherheit ergeben.

## Patentansprüche

1. Fahrrad mit zum Pedalantrieb (32) über einen Freilauf (43) zuschaltbarem, aus Batteriespeicher (24), Elektromotor (37) und Reduziergetriebe (38) bestehendem Motorantrieb für das Hinterrad (40), wobei durch den eingebauten Freilauf des Motorantriebes sowohl reiner Pedalbetrieb als auch reiner Motorantrieb und gemischter Antrieb mittels eines vom Fahrer betätigbaren Leistungsreglers (12) mit regulierbarer Antriebsleistung durchführbar sind, dadurch gekennzeichnet, daß die Antriebsleistung stufenlos regulierbar und derart bemessen ist, daß bei reinem Motorantrieb eine Fahrgeschwindigkeit von etwa 20 km/h auf ebener glatter Fahrbahn erreicht werden kann, und durch eine fallende Leistungskennlinie des Elektromotors bei höherer Fahrgeschwindigkeit abnimmt, daß der Leistungsregler (12) am Lenker (10) des Fahrrades angebracht ist und mittels einer Fernwirkungseinrichtung (13) mit dem Batteriespeicher (24) verbunden ist, daß der gesamte Motorantrieb (12, 24, 30) zu einer Baueinheit in einem Motorkasten (30) zusammengefaßt ist und daß der Motorkasten zum einen auf der Achse (36) des Hinterrades (40) und zum anderen an einer Rahmenstrebe (41) mit einem Bügel (42) auf der der Kettenpedalantriebseinrichtung (32) gegenüberliegenden Seite befestigt ist.

2. Fahrrad nach Anspruch 1, gekennzeichnet durch ein direkt auf dem Batteriekasten (24) angeordnetes Starkstromrelais (28), mit welchem die Motorantriebsleistung steuerbar ist.

3. Fahrrad nach Anspruch 1 oder 2, mit einem mehrere Batterien umfassenden Batteriespeicher, dadurch gekennzeichnet, daß die einzelnen Batterien in Reihe, in Gruppen oder parallel geschaltet werden können und mittels einer gesonderten Leistungsregelung die Zwischenstufen dieser Schaltgruppen überbrückbar sind.

4. Fahrrad nach Anspruch 1, 2 oder 3, dadurch gekennzeichnet, daß der mittels einer Kabelsteckverbindung (20) angeschlossene Batteriespeicher in einem abnehmbaren Batteriekasten (24) untergebracht ist, der mit dem Fahrrad diebstahlsicher mittels einer Schloßeinrichtung (21) verbunden ist.

5. Fahrrad nach einem der vorangehenden Ansprüche, dadurch gekennzeichnet, daß der nahe des Bremshebels (14) angeordnete Leistungsregler als Drehgriff ausgebildet ist, der bei Betätigung des Bremshebels losgelassen wird, wodurch die Leistungsregelung selbsttätig auf Null-Leistung springt.

6. Fahrrad nach Anspruch 5, dadurch gekennzeichnet, daß in Null-Stellung des Leistungsreglers (12) die Relaissteuerung mittels einer Rückstellkraft auf Null-Antriebsleistung geschaltet wird.

7. Fahrrad nach einem der vorangehenden Ansprüche, dadurch gekennzeichnet, daß der gesamte Motorantrieb aus drei Baueinheiten besteht, und zwar aus

A) dem am Lenker (10) des Fahrrads angebrachten Leistungsregler (12), kombiniert mit dem Handbremshebel (14) und einem Bowdenzug (13) und einem Zusatzhebel (19) auf der entgegengesetzten Seite des Lenkers (10) zur Ausschaltung des Freilaufs (43) im Motorantrieb (12, 24, 30),

B) dem im Pedalbereich (22) am Fahrradrahmen (18) abnehmbar aufgehängten Batteriekasten (24), kombiniert mit einem abnehmbaren Relaiskasten (28), und

C) dem neben der Hinterachse (36) des Fahrrads am Fahrradrahmen (18) befestigten Motorkasten (30), der den Elektromotor (37) und das mit dem Hinterrad (40) verbundene Reduziergetriebe (38) und den Freilauf (43) enthält,

wobei diese drei Einheiten an einem vorhandenen Fahrrad üblicher Bauart ohne Veränderung desselben nachträglich anbringbar sind.

8. Fahrrad nach einem der vorangehenden Ansprüche, dadurch gekennzeichnet, daß am Lenker (10) ein Ladezustands-Anzeiger (16) für den Batteriespeicher vorgesehen ist.

9. Fahrrad nach einem der vorangehenden Ansprüche, dadurch gekennzeichnet, daß der Freilauf (43) des Motorantriebs durch eine am Fahrrad vorgesehene Fernbedienungseinrichtung mit einem Hebelgriff (19) derart sperrbar ist, daß der Motor bei Außenantrieb, z.B. bei Bergabwärtsfahrten oder Bremsvorgängen, zur Wiederaufladung der Batterie (Leistungsrückgewinnung) als Generator arbeitet.

10. Fahrrad nach Anspruch 9, dadurch gekennzeichnet, daß der Hebelgriff (19) für die Fernbedienungseinrichtung an der linken Seite des Lenkers (10) angeordnet ist.

11. Fahrrad nach einem der vorangehenden Ansprüche, gekennzeichnet durch ein Ladegerät, mit welchem die 12-Volt-Batterien gleichförmig bei einer Spannung zwischen 12 bis 17 Volt aufgeladen werden, während die Motorbetriebsspannung bei Vollast 24 Volt beträgt.

12. Fahrrad nach Anspruch 11, dadurch gekennzeichnet, daß das Ladegerät am Fahrrad fest angebracht und verdrahtet ist und über ein ausziehbares Kabel mit Stecker für den Batterieladevorgang mit dem 220-Volt-Spannungsnetz verbindbar ist.

13. Fahrrad nach einem der vorangehenden Ansprüche, dadurch gekennzeichnet, daß die Fahrradbeleuchtung mit der Batterie verbindbar ist.

14. Fahrrad nach einem der vorangehenden Ansprüche, dadurch gekennzeichnet, daß am Hinterrad gegenüber einer Ketten-Pedal-Antriebseinrichtung mit Mehrgangschaltung das Kettenantriebsrad (39) für den Motorantrieb angeordnet ist.

15. Fahrrad nach Anspruch 14, dadurch gekennzeichnet, daß das Kettenantriebsrad (39) mit Hilfe einer Gummizwischenlage und einer halbgeteilten kreisförmigen Gegenscheibe an den Speichen des Hinterrades befestigt ist.

16. Fahrrad nach einem der vorangehenden Ansprüche, dadurch gekennzeichnet, daß am Lenker (10) ein durch einfaches Handaufschlagen betätigbarer und außerdem mit einem Schlüssel abschließbarer Not-Ausschaltknopf (15) für den Motorantrieb angeordnet ist.

**Revendications**

1. Bicyclette présentant un entraînement motorisé pour la roue arrière (40) qui est constitué d'un accumulateur à batteries (24), d'un moteur électrique (37) et d'un train réducteur (38), et peut être enclenché additionnellement par l'intermédiaire d'un axe libre (43), en vue de l'entraînement (32) du pédalier, l'axe libre intégré de l'entraînement motorisé autorisant tant un mode pédalage proprement dit qu'un entraînement motorisé proprement dit, et un entraînement mixte, au moyen d'un régulateur de puissance (12) à puissance d'entraînement régulable, pouvant être actionné par le conducteur, caractérisée par le fait que la puissance d'entraînement est régulable en continu et est calculée de telle sorte que, en mode entraînement motorisé proprement dit, une vitesse de déplacement d'environ 20 km/h puisse être atteinte sur une chaussée plane et lisse, et décroît en présence d'une vitesse de déplacement supérieure, suite à une courbe caractéristique de puissance décroissante du moteur électrique; par le fait que le régulateur de puissance (12) est installé sur le guidon (10) de la bicyclette, et est relié à l'accumulateur à batteries (24) au moyen d'un dispositif (13) d'actionnement à distance; par le fait que tout l'entraînement motorisé (12, 24, 30) est regroupé en un ensemble structurel unitaire, dans un carter (30) de moteur; et par le fait que le carter de moteur est fixé, d'une part, sur l'axe (36) de la roue arrière (40) et, d'autre part, sur une armature (41) du cadre, à l'aide d'un étrier (42), du côté situé à l'opposé du dispositif (32) d'entraînement du pédalier à chaîne.

2. Bicyclette selon la revendication 1, caractérisée par un relais (28) à courant fort directement disposé sur le boîtier (24) des batteries, et par lequel la puissance d'entrainement du moteur peut être commandée.

3. Bicyclette selon la revendication 1 ou 2, munie d'un accumulateur à batteries comprenant plusieurs batteries, caractérisée par le fait que les batteries individuelles peuvent être branchées en série, par groupes ou en parallèle, les échelons intermédiaires de ces groupes de commutation pouvant être court-circuités au moyen d'un réglage de puissance distinct.

4. Bicyclette selon la revendication 1, 2 ou 3, caractérisée par le fait que l'accumulateur à batteries, raccordé au moyen d'une jonction par câble enfichable (20), est logé dans un boîtier (24) de batteries amovible qui est relié à la bicyclette, à l'abri des effractions, au moyen d'un dispositif à serrure (21).

5. Bicyclette selon l'une des revendications précédentes, caractérisée par le fait que le régulateur de puissance, disposé à proximité du levier defreinage (14), est réalisé sous la forme d'une poignée tournante qui est relâchée lors d'un actionnement du levier de freinage, de sorte que le réglage de puissance saute automatiquement à la puissance zéro.

6. Bicyclette selon la revendication 5, caractérisée par le fait que, dans la position zéro du régulateur de puissance (12), la commande par relais est commutée à une puissance d'entraînement zéro au moyen d'une force de rappel.

7. Bicyclette selon l'une des revendications précédentes, caractérisée parle fait que tout l'entraînement motorisé se compose de trois ensembles structurels unitaires, plus précisément

A) du régulateur de puissance (12) installé sur le guidon (10) de la bicyclette, combiné au levier (14) de freinage manuel et à un câble Bowden (13), ainsi qu'à un levier supplémentaire (19), du côté opposé du guidon (10), en vue du débrayage de l'axe libre (43) dans l'entrainement motorisé (12, 24, 30),

B) du boîtier (24) de batteries, suspendu amoviblement au cadre (18) de la bicyclette, dans la zone de pédalage (22), en combinaison avec un boîtier de relais amovible (28), et

C) du carter (30) de moteur, qui est fixé au cadre (18) de la bicyclette à côté de l'axe postérieur (36) de la bicyclette, et renferme le moteur électrique (37), le train réducteur (38) relié à la roue arrière (40), et l'axe libre (43),

ces trois ensembles unitaires pouvant être montés après coup sur une bicyclette existante d'un type de réalisation classique, sans modification de cette dernière.

8. Bicyclette selon l'une des revendications précédentes, caractérisée par le fait qu'un indicateur (16) de la condition de charge de l'accumulateur à batteries est prévu sur le guidon (10).

9. Bicyclette selon l'une des revendications précédentes, caractérisée par le fait que l'axe libre (43) de l'entraînement motorisé peut être bloqué, par l'intermédiaire d'un dispositif d'actionnement à distance prévu sur la bicyclette et muni d'une poignée (19) du type levier, de telle sorte qu'en présence d'un entraînement extérieur, par exemple lors de déplacements en descente ou de processus de freinage, le moteur fonctionne en tant que générateur pour recharger la batterie (récupération de puissance).

10. Bicyclette selon la revendication 9, caractérisée par le fait que la poignée (19) du type levier, destinée au dispositif d'actionnement à distance, se trouve du côté gauche du guidon (10).

11. Bicyclette selon l'une des revendications précédentes, caractérisée par un chargeur par lequel les batteries de 12 volts sont chargées uniformément en présence d'une tension comprise entre 12 et 17 volts, tandis que la tension de service du moteur mesure 24 volts en condition de pleine charge.

12. Bicyclette selon la revendication 11, caractérisée par le fait que le chargeur est monté rigidement et câblé sur la bicyclette, et peut être raccordé au réseau de tension de 220 volts, par l'intermédiaire d'un câble déboîtable à fiche, pour le processus de chargement des batteries.

13. Bicyclette selon l'une des revendications précédentes, caractérisée par le fait que l'éclairage de la bicyclette peut être raccordé à la batterie.

14. Bicyclette selon l'une des revendications précédentes, caractérisée par le fait que le pignon (39) menant la chaîne pour l'entraînement motorisé est disposé, sur la roue arrière, en vis-à-vis d'un dispositif à plusieurs vitesses assurant l'entraînement du pédalier à chaîne.

15. Bicyclette selon la revendication 14, caractérisée par le fait que le pignon (39) menant la chaîne est fixé, aux rayons de la roue arrière, à l'aide d'une garniture intercalaire en caoutchouc et d'un disque circulaire complémentaire (41) scindé en deux parties.

16. Bicyclette selon l'une des revendications précédentes, caractérisée par le fait qu'un bouton (15) d'arrêt d'urgence de l'entraînement motorisé, actionnable par simple impact manuel et verrouillable, en outre, à l'aide d'une clé, est disposé sur le guidon (10).

## Claims

1. Bicycle with a motor drive for the rear wheel (40), consisting of a storage battery (24), electric motor (37) and reduction gearing (38) and which can be connected to the pedal drive (32) by way of a freewheel (43), due to the incorporated freewheel of the motor drive, both pure pedal operation as well as pure motor drive and mixed drive being able to be achieved by means of an output regulator (12) with adjustable drive power, able to be actuated by the rider, characterised in that the drive power is continuously variable and rated so that in the case of pure motor drive, a travelling speed of approximately 20 kilometres per hour can be achieved on a flat, smooth road and due to a falling power characteristic curve of the electric motor decreases at a higher travelling speed, that the output regulator (12) is disposed on the handlebars (10) of the bicycle and is connected by means of a remote control device (13) to the storage battery (24), that the entire motor drive (12, 24, 30) is combined as one unit in a motor case (30) and that the motor case is attached firstly on the axle (36) of the rear wheel (40) and secondly to a frame strut (41) with a clip (42) on the side lying opposite the chain pedal drive device (32).

2. Bicycle according to Claim 1, characterised by a power relay (28) located directly on the battery case (24), by which the motor drive output can be controlled.

3. Bicycle according to Claim 1 or 2, with a storage battery comprising several batteries, characterised in that the individual batteries can be connected in series, in groups or in parallel and the intermediate stages of these connection groups can be bridged by means of a separate output regulator.

4. Bicycle according to Claim 1, 2 or 3, characterised in that the storage battery connected by means of a cable coupling (20) is disposed in a removable battery case (24), which is connected to the vehicle in a theft-proof manner by means of a locking device (21).

5. Bicycle according to one of the preceding Claims, characterised in that the output regulator located close to the brake lever (14) is constructed as a control grip, which is released upon actuating the brake lever, due to which the output regulation automatically returns to zero output.

6. Bicycle according to Claim 5, characterised in that in the zero position of the output regulator (12), the relay control is switched by means of a restoring force to zero drive power.

7. Bicycle according to one of the preceding Claims, characterised in that the entire motor drive consists of three components and indeed of

A) the output regulator (12) located on the handlebar (10) of the bicycle, combined with the hand-brake lever (14) and a Bowden cable (13) and an additional lever (19) on the opposite side of the handlebar (10) for disengaging the freewheel (43) in the motor drive (12, 24, 30),

B) the battery case (24) suspended in a removable manner from the bicycle frame (18) in the pedal area (22), combined with a removable relay case (28), and

C) the motor case (30) attached to the bicycle frame (18) beside the rear axle (36) of the bicycle, which case contains the electric motor (37) and the reduction gearing (38) and freewheel (43) connected to the rear wheel (40),

these three units being able to be located subsequently on an existing bicycle of conventional construction without altering the latter.

8. Bicycle according to one of the preceding Claims, characterised in that provided on the handlebar (10) is an indicator (16) for the state of charge of the storage battery.

9. Bicycle according to one of the preceding Claims, characterised in that the freewheel (43) of the motor drive can be blocked by a remote control device with a lever (19) provided on the bicycle so that in the case of an external drive, for example when travelling downhill or at the time of braking operations, the motor operates as a generator for re-charging the battery (recovery of power).

10. Bicycle according to Claim 9, characterised in that the lever (19) for the remote control device is disposed on the left-hand side of the handlebars (10).

11. Bicycle according to one of the preceding Claims, characterised by a battery charger, by which the 12-volt batteries are charged steadily at a voltage between 12 to 17 volts, whereas the motor operating voltage at full load amounts to 24 volts.

12. Bicycle according to Claim 11, characterised in that the battery charger is located securely and wired on the bicycle and can be connected to the 220 volt mains voltage by way of a removable cable with plug for the battery-charging process.

13. Bicycle according to one of the preceding Claims, characterised in that the bicycle lighting can be connected to the battery.

14. Bicycle according to one of the preceding Claims, characterised in that the chain drive wheel (39) for the motor drive is located on the rear wheel opposite a chain pedal drive device with multi-speed switching.

15. Vehicle according to Claim 14, characterised in that the chain drive wheel (39) is attached to the spokes of the rear wheel by means of a rubber washer and a divided, circular washer.

16. Bicycle according to one of the preceding Claims, characterised in that disposed on the handlebar (10) is an emergency cutout button (15) for the motor drive, which can be actuated by simple manual depression and can also be shut off by a spanner.

FIG. 1

FIG. 2

FIG. 3